# EUROPEAN PATENT SPECIFICATION

(11) **EP 2 625 827 B1**
(45) Date of publication and mention of the grant of the patent: **18.06.2014**
(21) Application number: 10763685.4
(22) Date of filing: 06.10.2010
(51) Int. Cl.: H04W 28/02, H04W 28/10, H04L 12/813, H04L 12/823, H04L 12/851, H04L 12/801

(54) **UPLINK TRAFFIC SEPARATION IN AN EDGE NODE OF A COMMUNICATION NETWORK**
SEPARIERUNG DES AUFWÄRTSVERKEHRS IN EINEM RANDKNOTEN EINES KOMMUNIKATIONSNETZES
SEPARATION DU TRAFIC MONTANT DANS UN NOEUD EN BORDURE D'UN RESEAU DE COMMUNICATION

(43) Date of publication of application: 14.08.2013
(73) Proprietor: Telefonaktiebolaget L M Ericsson (PUBL), 164 83 Stockholm (SE)
(72) Inventor: LUDWIG, Reiner, 52393 Hürtgenwald (DE); HEDMAN, Peter, S-252 51 Helsingborg (SE)
(74) Representative: Burchardi, Thomas
(86) International application number: PCT/EP2010/064955
(87) International publication number: WO 2012/045352

(56) References cited:
- EP-A1- 2 015 524
- WO-A1-2007/087828
- WO-A1-2009/069867
- WO-A2-2007/071816
- US-A1- 2004 100 901
- US-A1- 2005 129 013
- US-A1- 2010 020 749

## Description

### Technical Field

The present invention relates to methods of separating uplink (UL) traffic in an edge node of a communication network and to corresponding devices.

### Background

In communication networks, traffic separation is a concept which allows that different types of packet traffic receive different treatment in user plane traffic forwarding functions, e.g. with respect to queuing, scheduling, error control, or the like. For implementing traffic separation, an UL edge node, e.g. a node transmitting data traffic from an end device into a certain network or network domain, may classify packets into different traffic classes, e.g. voice traffic, multimedia traffic or internet traffic. Examples of edge nodes are a user equipment (UE), e.g. a mobile terminal, transmitting data into a communication network via a radio access, and a residential gateway (RG) transmitting data into a communication network via a fixed broadband access, e.g. using Digital Subscriber Line (DSL) or coaxial cable technology.

If the edge node is a RG, traffic classification can be accomplished in the UL direction, i.e. from the RG to the network, on the basis of port mapping. In this case, the RG is provided with multiple physical ports which are each dedicated to a certain type of end device, e.g. a voice port for connecting to a fixed phone, a TV port for connecting to a digital TV or to a digital set-top box, and an internet port for connecting to a computer or other type of multipurpose internet device. The internet port may also be coupled to an access point of a Wireless Local Area Network (WLAN), sometimes also referred to as a WiFi access point. In such a scenario, all traffic received in the voice port may be classified as voice traffic, all traffic received on the TV port may be classified as multimedia traffic, and all traffic received on the internet port may be classified as internet traffic. The data packets of the classified traffic may then be provided with the corresponding marking to be used in the UL transmission via the fixed access.

As an alternative, the traffic classification may be based on a semi-static configuration of the residential gateway. For example, all data traffic sent to a certain Internet Protocol (IP) address or to a certain IP address range may be assigned to a certain traffic class.

In a mobile communication network according to the Third Generation Partnership Project (3GPP) Technical Specifications (TSs), e.g. a Global System for Mobile Communications (GSM) network, a Universal Mobile Telecommunications System (UMTS) network, or a System Architecture Evolution (SAE)/Long Term Evolution (LTE) network, traffic separation may be implemented using packet filters. More specifically, a set of packet filters may be used to direct data packets of a certain traffic class to a corresponding bearer established between the UE and a gateway in the mobile communication network, e.g. a Packet Data Network (PDN) gateway. In a mobile communication network using GERAN (GSM EDGE Radio Access Network) or UTRAN (UMTS Terrestrial Radio Access Network) access technology such a bearer may be referred to as an IP CAN (IP Connectivity Access Network) bearer. In a mobile communication network using EPS (Evolved Packet System) access technology such a bearer may be referred to as an EPS bearer. A set of packet filters used to direct data packets to a corresponding bearer is also referred to as a Traffic Flow Template (TFT). A TFT may be installed in the UE for directing UL data to a corresponding bearer and may be installed in the gateway for directing downlink (DL) data packets to a corresponding bearer. In general terms, a bearer is an information transmission path with defined parameters, e.g. capacity, delay and bit error rate, etc. An IP CAN bearer can thus be described as an IP transmission path of defined capacity, delay and bit error rate, etc. and an IP CAN session as the association between a UE represented by an IP address or UE identity information and a PDN represented by a PDN identifier, e.g. an Access Point Name (APN).

According to 3GPP TS 23.401, the UE routes UL data packets to the different EPS bearers based on UL packet filters in the TFTs assigned to these EPS bearers. The UE evaluates for a match, first the UL packet filter amongst all TFTs that has the lowest evaluation precedence index and, if no match is found, proceeds with the evaluation of UL packet filters in increasing order of their evaluation precedence index. This procedure is executed until a match is found or all UL packet filters have been evaluated. If a match is found, the UL data packet is transmitted on the EPS bearer that is associated with the TFT of the matching UL packet filter. If no match is found, the UL data packet shall be sent via the EPS bearer that has not been assigned any UL packet filter. If all EPS bearers (including a default EPS bearer for that PDN) have been assigned one or more UL packet filters, the UE discards the UL data packet.

Accordingly, the packet filters are used to positively discriminate between data packets by providing that a data packet which matches a packet filter gets a corresponding forwarding treatment.

However, some forwarding policies of data packets are hard to implement using the existing packet filter mechanisms, e.g. may require a rather complex set of packet filters. This issue is particularly relevant when considering that the number of packet filters in an UL TFT used by the UE is limited.

Similar problems may also exist in other communication network environments, e.g. in an UL edge node implemented by a RG transmitting separated UL data packets into a communication network having a broadband access domain.

Accordingly, there is a need for efficient ways of separating UL data traffic in an UL edge node of a communication network .

Document WO 2009/069867 A1 describes a process of filtering an uplink IP packet by matching source IP address, destination IP address, protocol identifier, and source and destination port numbers of the uplink IP packet with an uplink packet filter and sending the uplink IP packet through a corresponding dedicated bearer based on the filtering criteria.

### Summary

According to an embodiment of the invention, a method of separating data traffic is provided, which can be used in an UL edge node of a communication network. According to the method, data packets in UL traffic from the UL edge node are identified on the basis of at least one packet filter. Gating data associated with the at least one packet filter are evaluated and the identified data packets are discarded depending on the evaluation of the gating data.

According to a further embodiment of the invention, a method of policy control is provided. According to the method, at least one packet filter for identifying data packets in UL traffic from an UL edge node of the communication network is signalled to the UL edge node. Further, gating data associated with the at least one packet filter are signalled to the UL edge node. The gating data indicate whether data packets identified by the at least one packet filter are to be discarded by the UL edge node.

According to a further embodiment of the invention, a device is provided which is operable as a UL edge node of a communication network, e.g. a UE or a RG. The device is provided with an interface configured to transmit UL data traffic from the UL edge node and a processor. The processor is configured to identify, on the basis of at least one packet filter, data packets in the UL data traffic. In addition, the processor is configured to evaluate gating data associated with the at least one packet filter and to discard the identified data packets depending on the evaluation of the gating data.

According to a further embodiment of the invention, a device is provided which is operable as a policy controller for an UL edge node of a mobile communication network. The device comprises an interface configured to signal at least one packet filter and gating data associated with the at least one packet filter to the UL edge node. The at least one packet filter is configured to identify data packets in UL traffic from the UL edge node. The gating data indicates whether data packets identified by the at least one packet filter are to be discarded by the UL edge node.

According to further embodiments, other methods, network components, or computer program products may be provided.

### Brief Description of the Drawings

Fig. 1 schematically shows a communication network environment to illustrate different application scenarios of concepts according to embodiments of the invention.
Fig. 2 schematically illustrates a communication network in which concepts according to embodiments of the invention may be applied.
Fig. 3 schematically illustrates an edge node according to an embodiment of the invention.
Fig. 4 schematically illustrates a policy controller according to an embodiment of the invention.
Fig. 5 schematically illustrates a user equipment according to an embodiment of the invention.
Fig. 6 shows a flowchart for illustrating a method according to an embodiment of the invention.
Fig. 7 shows a flowchart for illustrating a further method according to an embodiment of the invention.

### Detailed Description of Embodiments

In the following, the invention will be explained in more detail by referring to exemplary embodiments and to the accompanying drawings. The illustrated embodiments relate to concepts of separating UL traffic in a UL edge node of a communication network. The communication network may have a mobile communication network domain, e.g. implemented in accordance with the 3GPP TSs, and/or a broadband access domain.

The illustrated embodiments relate to separation of UL data traffic in an UL edge node of a communication network. The UL edge node transmits the separated data traffic to the communication network. The communication network may provide an access via a fixed access, i.e. implemented using DSL access technology, optical access technology or coaxial cable access technology. In addition, the communication network may also provide an access via a radio access node of a cellular mobile radio network. For example, the cellular mobile radio network may be implemented according to the 3GPP Technical Specifications, e.g. as a GSM network, as a UMTS network, or as a SAE/LTE network. However, it is to be understood that the concepts as described herein may also be applied to other types of communication networks. In the embodiments as described, the separation of UL traffic is accomplished by means of one or more UL packet filters. Gating data associated with the UL packet filters is evaluated so as to determine whether UL data packets identified by one or more UL packet filter are to be discarded.

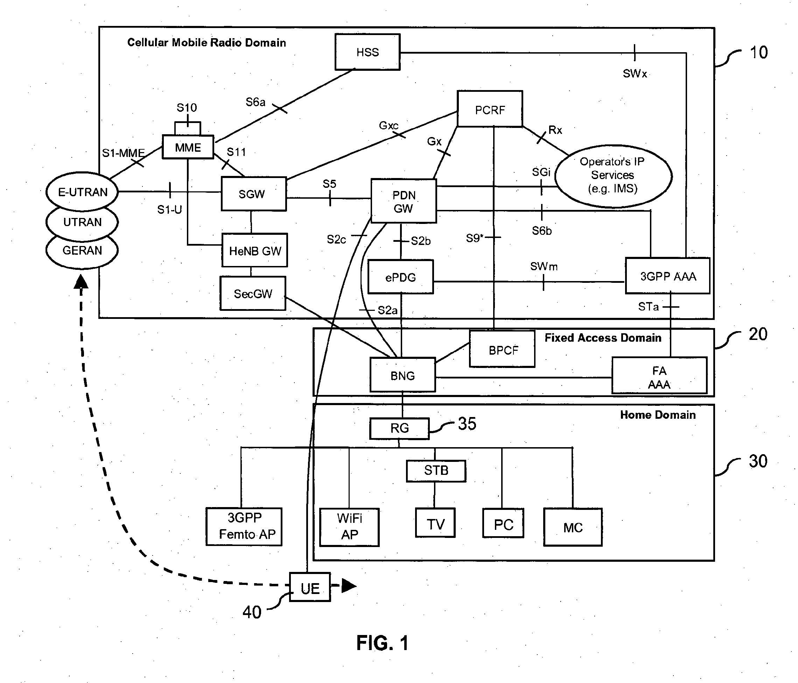

Fig. 1 schematically illustrates a communication network environment in which concepts according to embodiments of the invention may be applied. As illustrated, the communication network environment includes a cellular mobile radio network domain 10 according to the 3GPP technical specifications. Further, a fixed access domain 20 is provided. In addition, the communication network environment includes a home domain 30, which includes various subscriber premises devices coupled to the fixed access domain 20. Components of the home domain 30 are typically located at the subscriber premises site. At the interface between the home domain 30 and the fixed access domain 20, a RG 35 is provided, which is a communication device at the subscriber premises site, which is used to couple the subscriber premises devices to the fixed access domain 20. In particlular, the RG 35 may couple a local area network (LAN) at the subscriber premises site to the fixed access domain 20 of the communication network.

In the illustrated example, the cellular mobile radio network domain 10 is implemented according to 3GPP SAE/LTE. As illustrated, the cellular mobile radio network domain 10 includes a PDN Gateway (PDN GW) which is coupled to Radio Access Networks (RANs) via a Serving Gateway (SGW). As illustrated, the RANs may include one or more GERAN, UTRAN or Evolved UTRAN (E-UTRAN). In the cellular mobile radio network domain 10, operator's IP services, e.g. IP Multimedia Subsystem (IMS) services, may be hosted by application servers or the like. A mobile terminal or UE 40, e.g. a mobile phone, a portable computer or the like, may access the operator's IP services via the PDN GW.

In addition, the cellular mobile radio network domain 10 includes control nodes, such as a Policy and Charging Rules Function (PCRF) and a Mobility Management Entity (MME), a subscriber database in the form of a Home Subscriber Server (HSS), and a 3GPP Authentication, Authorization and Accounting (AAA) server.

Further, for supporting the 3GPP Femto access technology, the cellular mobile radio network domain 10 includes a Home eNodeB Gateway (HeNB GW) and a Security Gateway (Sec GW). For coupling to non-3GPP network domains, e.g. to the fixed access domain 20, the cellular mobile radio network domain 10 further includes an Evolved Packet Data Gateway (ePDG). Further details concerning the above components of the cellular mobile radio network domain 10 and the interfaces provided between these components can be taken from the 3GPP technical specifications.

The fixed access domain 20 includes operator infrastructure for providing fixed access to the communication network, e.g. using DSL access technology, optical access technology, or coaxial cable access technology. For this purpose, a Broadband Network Gateway (BNG) is provided,which communicates with the ePDG and/or the PDN GW in the cellular mobile radio network domain 10. Further, the BNG communicates with the RG 35 in the home domain 30 using fixed, e.g wire-based or cable based, communication links. Depending on the access technology used with respect to the RG 35, the fixed access domain 20 may be provided with a corresponding access node, e.g. a DSL Access Multiplexer (DSLAM), an Optical Network Terminal (ONT), or a coaxial cable head end.

Further, the fixed access domain 20 includes a policy control node in the form of a Broadband Policy and Charging Function (BPCF) and a Fixed Access (FA) Authentication, Authorization and Accounting (AAA) server. The policy control node in the cellular mobile radio network domain 10, i.e the PCRF, communicates with the policy control node in the fixed access domain 20, i.e. the BPCF. Further, the 3GPP AAA server communicates with the FA AAA server. In addition, the BNG in the fixed access domain 20 communicates with the Sec GW in the cellular mobile radio network domain 10. In this way, trusted interworking between the cellular mobile radio network domain 10 and the fixed access domain 20 is possible.

The home domain 30 includes the RG 35 and a number of subscriber premises devices connected thereto. In the illustrated example, the subscriber premises devices include a digital entertainment device in the form of a Media Center (MC), a multipurpose computing device in the form of a Personal Computer (PC), a television set (TV) coupled to the RG 35 via a Set-Top-Box (STB), and wireless access points, in particular a WiFi Access Point (AP), and a 3GPP Femto Access Point (AP).

In the communication network environment of Fig. 1, the UE 40 may move between accesses in the cellular mobile radio network domain 10, e.g. using GERAN, UTRAN or E-UTRAN, and between accesses via the fixed access domain 20, e.g. via the 3GPP Femto AP or the WiFi AP. This is illustrated by the dashed arrow.

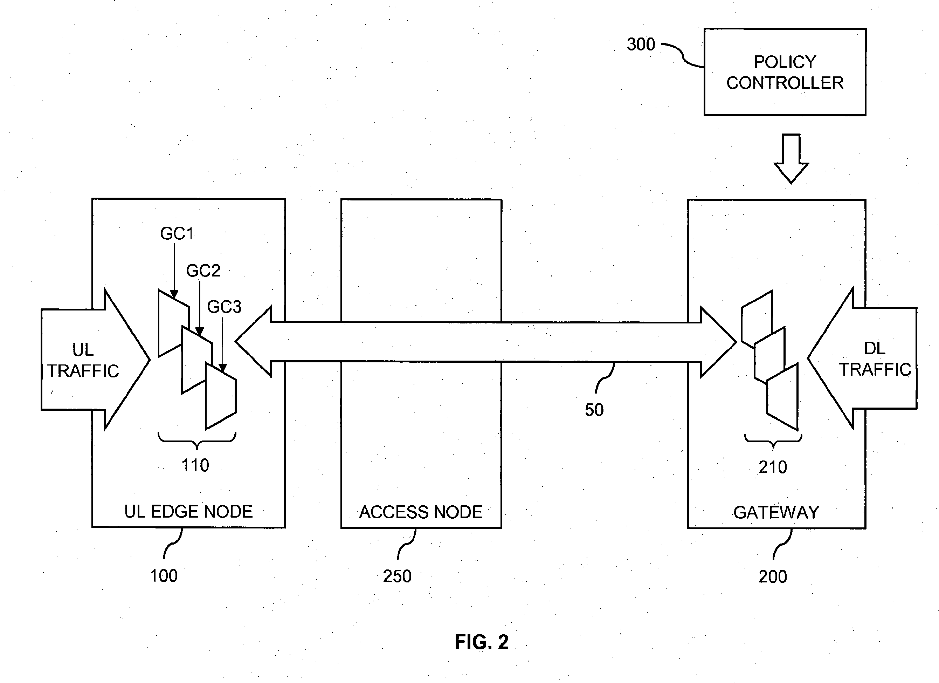

Fig. 2 schematically illustrates a communication system in which separation of UL data traffic is accomplished in accordance with an embodiment of the invention. The communication system includes an UL edge node 100, an access node 250, and a gateway 200. In addition, the communication system includes a policy controller 300. The illustrated communication system may be part of the communication network environment of Fig. 1. For example, the UL edge node 100 may correspond to the UE 40 or to the RG 35. The gateway 200 may correspond to the BNG or the PDN GW. If the UL edge node 100 corresponds to the RG 35, the access node 250 may be any type of access node coupled between the BNG and the RG 35 so as to implement the fixed access between the BNG and the RG 35. The access node 250 may then also be integrated in the BNG or in the RG 35. By way of example, the access node 250 may be implemented by a DSLAM, an ONT, a cable modem, or the like. The access node 250 may be located in the fixed access domain 20 or in the home domain 10. If the UL edge node 100 corresponds to the UE 40, the access node 250 may also be the RG 35. Accordingly, the edge node 100 may be a UE coupled to the gateway 200 via a RG or may be a RG itself. The RG has a fixed communication link to the gateway 200, while a communication link between the UE 40 and the RG 35 may be wireless. The RG is typically authenticated using the fixed communication link to the gateway 200, which for this purpose may communicate with an authentication server, e.g. the FA AAA server of Fig. 1. If the UE 40 is connected via the RG 35 to the gateway 200, independent authentication of the UE 40 in a fixed access domain is then not necessary. The policy controller 300 may be the BPCF or the PCRF.

As further illustrated, the UL edge node 100 and the gateway 200 may communicate data packets in the DL direction and the UL direction. The data packets may be assigned to different traffic classes, one of which being schematically illustrated by double headed arrow 50. The traffic classes may be, e.g., voice traffic, multimedia traffic, and internet traffic. For each of the traffic classes a corresponding forwarding treatment in intermediate nodes, e.g. the access node 250 or a transport node (not illustrated), may be defined. Each traffic class may correspond to a certain Quality of Service (QoS) level. For example, the voice traffic class may have a higher QoS level than the internet traffic class. In the case of communication between the UE 40 and the PDN GW, the different traffic classes may be assigned to corresponding bearers.

In the following, concepts will be described which may be used to facilitate implementation of forwarding policies.

According to embodiments of the present invention, separation of UL data traffic in the edge node 100 is accomplished by one or more UL packet filters 110. A set of packet filters 110 may be used to assign the UL data packets to the traffic class 50. If the traffic class 50 corresponds to a bearer established between a UE and a gateway of a mobile communication network, such a set of UL packet filters 110 may also be referred to as a TFT. In a similar manner, DL data packets may be assigned to the traffic class 50 by a set of DL packet filters 210, which may be referred to as TFT. According to some embodiments, the generation and installation of the UL packet filters 110 is controlled by the policy controller 300, e.g. on the basis of policy data or control data received from AFs. The generation and installation of the DL packet filters 210 may be controlled by the policy controller 300. as well.

The U L packet filters 110 may operate to identify U L data packets on the basis of information in the UL data packets, e.g. on the basis of address information. For example, the UL packet filters may operate on the basis of be a pattern for matching an IP 5 tuple (source IP address, destination IP address, source port number, destination port number, protocol ID of the protocol above IP). In the pattern a value left unspecified in the packet filter may match any value of the corresponding information in the UL data packet, i.e. wildcards may be defined. Further, an IP address may be combined with a prefix mask, and/or port numbers may be specified as port ranges. The pattern can also be extended by the Type of Service (TOS) (IPv4) / Traffic class (IPv6) and Mask. The pattern can also consist of the destination IP address, protocol ID of the protocol above IP, the Type of Service (TOS) (IPv4) / Traffic class (IPv6) and Mask and the IPSec Security Parameter Index (SPI). The pattern can also consist of the destination IP address, the Type of Service (TOS) (IPv4) / Traffic class (IPv6) and Mask and the Flow Label (IPv6). The DL packet filters 210 may operate to identify DL data packets in a similar manner.

As further illustrated, the UL packet filters 110 are each controlled by corresponding gating control signals GC1, GC2, GC3. By means of the gating control signals GC1, GC2, GC3, the UL packet filters 110 may be controlled to discard the identified UL data packets, rather than forwarding the identified UL data packets towards the gateway 200. In this way, negative discrimination between UL data packets becomes possible. This can be used to efficiently block certain UL packet flows in the UL edge node. Further, this can also be useful for implementing a unidirectional DL bearer by using a set of DL packet filters 210 that matches one or more traffic flows and set of UL packet filters 110 that blocks these traffic flows, i.e. discards the identified UL data packets.

The gating control signals GC1, GC2, GC3 are derived from gating data associated with the UL packet filters 110. The gating data may be preconfigured in the UL edge node 100, i.e. stored in the form of static configuration data. For example, certain UL packet identifiers could be statically configured to be associated with blocking UL packet filters. As an alternative or in addition, the gating data may also be dynamically signalled to the UL edge node 100, e.g. by the policy controller 300. If the gating data are signalled by the policy controller 300, the policy controller 300 will typically comprises means, e.g. a unit, processor, or interface to obtain or derive the gating data. The gating data may thus be generated by the policy controller, e.g. on the basis of policy data or control data received from AFs. For example, the gating data could be dynamically signalled to the UL edge node 100 together with filter data for defining the UL packet filters 110. For example, this could be accomplished during a bearer establishment or modification procedure according to the 3GPP TSs. As an alternative, the gating data could also be signalled separately from the gating data, e.g. by means of a dedicated signalling message. According to an embodiment, the gating data may be provided in the form of one or more gating flags, e.g. one gating flag assigned to each UL packet filter 110. Here, it should be noted that the signalling may be direct or indirect. For example, in some scenarios there is no direct signalling connection between the UL edge node 100 and the policy controller 300 and the policy controller 300 may use indirect signalling via the gateway 200, i.e. the policy controller 300 signals the gating data to the gateway 200, and the gateway signals the gating data to the UL edge node 100. If the UL edge node 100 is a UE operating in an 3GPP access environment, the signalling may be from the PCRF via the Gx interface to a Policy and Charging Enforcement Function (PCEF) in the PDN GW and then to the UE, or the signalling may be via the Gxx interface to a Bearer Binding and Event Reporting Function (BBERF), which may be in the SGW, and then to the UE. In this respect, it should be noted that the PCEF and the BBERF may be regarded as policy controller as well. If the UL edge node 100 is a RG, a configuration server may act as the policy controller 300. For example, the RG can periodically pull configuration data, including the gating data, from the configuration data, or the configuration server may push the configuration data to the RG. This could be done, e.g., once per day.

In the illustrated embodiment, the gating data thus specifies on a per packet filter basis whether the identified data packets are to be discarded. That is to say, the gating data may specify discarding of the identified data packets individually for each UL packet filter 110.

Using gating data on a per packet filter basis, the following exemplary scenarios can be implemented in the communication system of Fig. 2: A) All UL packet filters 110 may be controlled to forward the identified UL data packets according to the traffic forwarding policy associated with the UL packet filter, i.e. the traffic forwarding policy of the traffic class 50. This may involve marking the identified UL data packets according to a corresponding traffic class or directing the identified UL packet filters to a corresponding bearer. B) Only some of the UL packet filters 110 may be controlled to discard the identified UL data packets while the other UL packet filters 110 are controlled to forward the identified UL data packets according to a traffic forwarding policy associated with the UL packet filter. In this way, certain traffic flows may be selectively blocked in the UL direction which allows to implement asymmetrical bidirectional bearers, i.e. bearers which carry certain traffic flows only in the DL direction. One application scenario would be to block selected UL traffic on a default bearer established between a UE acting as the UL edge node 100 and the gateway 200. C) All UL packet filters may be controlled to discard the identified UL data packets. In this way, certain traffic flows may be allowed only in the DL direction which allows to efficiently implement unidirectional bearers. Here, it is to be understood that the number of UL packet filters 110 and the number of DL packet filters 210 as illustrated in Fig. 2 is merely exemplary. Further, the UL packet filters 110 and the DL packet filters 210 could be organized into sets in any desired manner. For example, the illustrated UL packet filters 110 and DL packet filters 210 could correspond to a set associated with a particular bearer corresponding to the traffic class 50, and other sets (not illustrated) could be provided for other traffic classes or bearers.

According to an embodiment, the U L packet filters 110 are evaluated according to a precedence order, which may be statically configured or dynamically signalled to the UL edge node. In this case, the gating control of the UL packet filters 110 may be accomplished in such a way that, if a UL packet is identified by one of the a UL packet filters 110 and the gating data indicates that the UL data packets identified by this filter are to be discarded, the identified UL data packet is discarded without further evaluation of the other UL packet filters 110. That is to say, those UL packet filters 110 which have not yet been evaluated according to the given precedence order, are not evaluated anymore. The UL packet will therefore be discarded even if it also matches another UL packet filter 110, for which the gating data indicates that the identified data packets are not to be discarded. According to some embodiments, one ore more of the UL packet filters 110, for which the gating data define that the identified UL packets are to be discarded, are arranged as final packet filters of a packet filter cascade, e.g. are arranged to be evaluated last according to the precedence order.

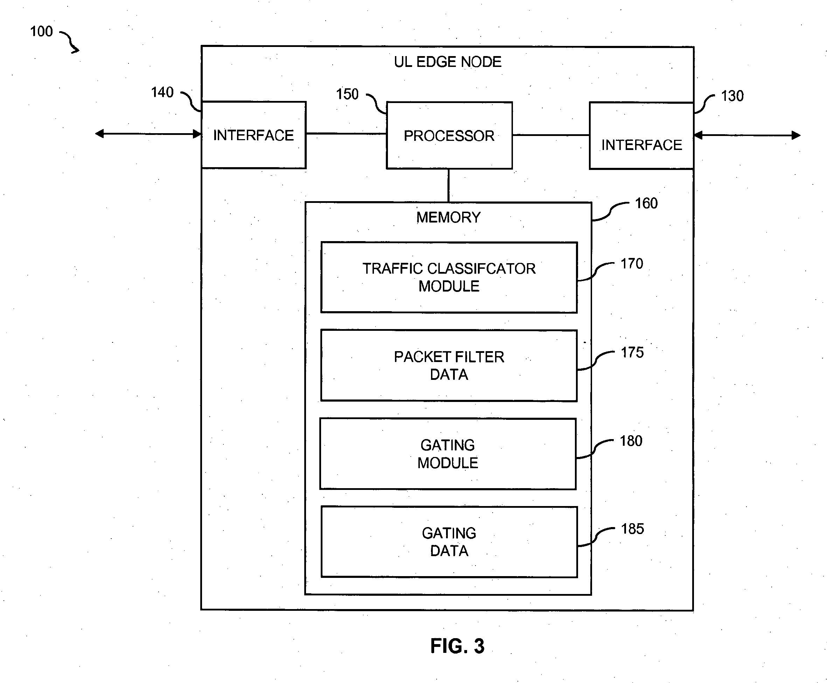

Fig. 3 illustrates an exemplary implementation of a communication device which is operable as the UL edge node 100. As explained above, the UL edge node 100 may be a mobile terminal, e.g. the UE 40 explained in connection with Fig. 1, or a RG, e.g. the RG 35 as explained in connection with Fig. 1.

According to the illustrated implementation, the UL edge node 100 includes at least a first interface 130 for coupling to the gateway 200. The interface 130 may be implemented as a bidirectional interface, i.e. include a receive interface for receiving DL data packets and a transmit interface for transmitting UL data packets. In some embodiments, e.g. if the UL edge node 100 is implemented as a RG, it may also include at least one second interface 140 for coupling to other devices, e.g. to the subscriber premises devices as illustrated in Fig. 1. The second interface 140 may be implemented as a bidirectional interface as well, i.e. include a receive interface and a transmit interface. Further, the UL edge node 100 includes a processor 150 coupled to the interface(s) 130, 140 and a memory 160 coupled to the processor 150. The memory 160 may include a read-only memory (ROM), e.g. a flash ROM, a random-access memory (RAM), e.g. a Dynamic RAM (DRAM) or static RAM (SRAM), a mass storage, e.g. a hard disk or solid state disk, or the like. The memory 160 includes suitably configured program code to be executed by the processor 150 so as to implement the above-described functionalities of the UL edge node 100. More specifically, the memory 160 may include a packet classificator module 170 configured to classify the outgoing UL data packets in the above-described manner by applying the UL packet filters, and a gating module 180 configured to perform gating control on one or more of the UL packet filters 110 in the above described manner. In addition, the memory 160 may include packet filter data 175 defining the UL packet filters 110 and gating data 185 defining whether UL data packets identified by one or more of the UL packet filters 110 are to be discarded by the UL edge node.

It is to be understood that the structure as illustrated in Fig. 3 is merely schematic and that the UL edge node 100 may actually include further components which, for the sake of clarity, have not been illustrated. Also, it is to be understood that the memory 160 may include further types of program code modules, which have not been illustrated, e.g. program code modules for implementing known functionalities of a mobile terminal or of a residential gateway.

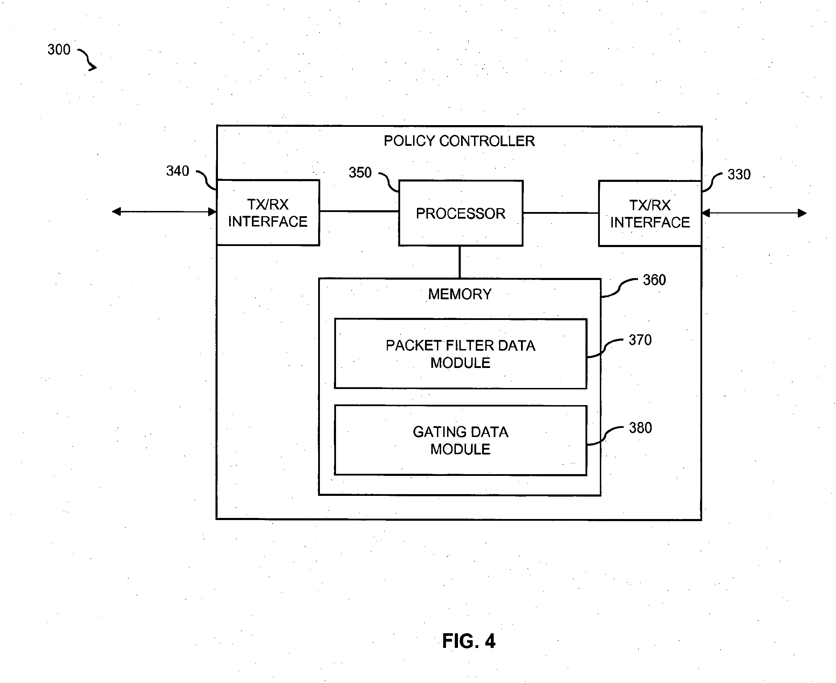

Fig. 4 illustrates an exemplary implementation of a network device which is operable as the policy controller 300. As explained above, the policy controller 300 may be the PCRF or the BPCF as explained in connection with Fig. 1.

According to the illustrated implementation, the policy controller 300 includes at least a first interface 330 for coupling to the gateway 200. The first interface 330 may be implemented as a bidirectional interface. If the policy controller is implemented as a PCRF, the first interface may be the Gx interface according to the 3GPP TSs. In some embodiments, the policy controller 300 may also include a second interface 340. For example, if the policy controller is implemented as a PCRF, the second interface may be the Rx interface according to the 3GPP TSs and allow for receiving policy data or receiving control data from AFs. The received policy data and/or control data may be used to generate the above-described gating data. The second interface 340 could also be used to receive gating data from other entities. The second interface 340 may be implemented as a bidirectional interface as well, i.e. include a receive interface and a transmit interface. Further, the policy controller 300 includes a processor 350 coupled to the interface(s) 330, 340 and a memory 360 coupled to the processor 350. The memory 360 may include a read-only memory (ROM), e.g. a flash ROM, a random-access memory (RAM), e.g. a Dynamic RAM (DRAM) or static RAM (SRAM), a mass storage, e.g. a hard disk or solid state disk, or the like. The memory 360 includes suitably configured program code to be executed by the processor 350 so as to implement the above-described functionalities of the policy controller 300. More specifically, the memory 360 may include a packet filter data module 370 configured to generate packet filter data of the UL packet filters 110 and/or a gating data module 380 configured to obtain or generate the gating data 185 associated with the UL packet filters 110.

It is to be understood that the structure as illustrated in Fig. 4 is merely schematic and that the policy controller 300 may actually include further components which, for the sake of clarity, have not been illustrated. Also, it is to be understood that the memory 360 may include further types of program code modules, which have not been illustrated, e.g. program code modules for implementing known functionalities of a mobile terminal or of a residential gateway. For example, a program code module may be provided for generating packet filter data of the DL packet filters 210.

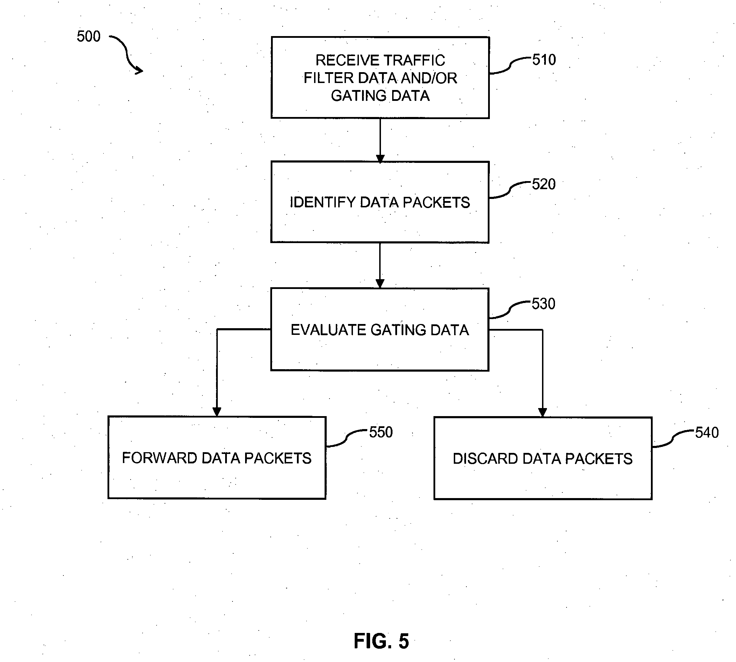

Fig. 5 shows a flowchart illustrating a method 500 for separating UL data traffic, which may be used to implement the above-mentioned concepts. The method may be implemented in a UL edge node of a communication network, e.g. the UL edge node 100 as discussed connection with Fig. 2, which may be the UE 40 or the RG 35 of Fig. 1.

In optional step 510, gating data are received by the UL edge node. The gating data may be received together with packet filter data for defining UL packet filters to which the gating data is associated. The gating data and/or the packet filter data may be received, directly or indirectly, from a policy controller, e.g. the policy controller 300 as discussed in connection with Fig. 2, which may be the PCRF or the BPCF of Fig. 1, a PCEF, a BBERF, or a configuration server. Alternatively, the gating data may be preconfigured in the UL edge node. In this case, step 510 may be omitted.

In step 520, data packets in UL data traffic from the UL edge node are identified by at least one packet filter. As mentioned above, the packet filter may operate on information in the data packets, such as an IP 5 tuple or the like.

In step 530, gating data associated with the at least one packet filter is evaluated. The gating data indicate whether the data packets identified by the at least one packet filter are to be discarded by the UL edge node. This may be on a per packet filter basis, so that discarding of the identified data packets can be individually controlled for each packet filter, e.g. for a single packet filter in a set of packet filters associated with a certain traffic class or bearer. If the evaluation indicates that the identified data packets are to be discarded, the method continues with step 540. If the evaluation indicates that the identified data packets are not to be discarded, the method continues with step 550.

In step 540, the identified data packets are discarded. This may be accomplished without further evaluation of other packet filters which may follow according to a given precedence order of evaluation.

In optional step 550, the identified data packets may be forwarder according to a traffic forwarding policy associated with the at least one packet filter.

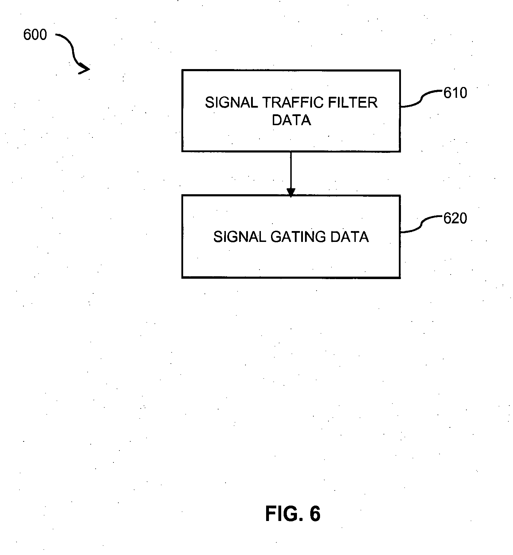

Fig. 6 shows a flowchart illustrating a method 600 for separating UL data traffic, which may be used to implement the above-mentioned concepts. The method may be implemented in a policy controller of a communication network, e.g. the policy controller 300 as discussed connection with Fig. 2, which may be the PCRF or the BPCF of Fig. 1.

In step 610, traffic filter data are signalled to an UL edge node of the communication network. The traffic filter data define at least one packet filter for identifying data packets in UL traffic from the UL edge node, e.g. UL packet filters 110 as discussed in connection with Fig. 2. As mentioned above, the at least one packet filter may operate on information in the data packets, such as an IP 5 tuple or the like. The UL edge node may be the UL edge node 100 as discussed connection with Fig. 2, which may be the UE 40 or the RG 35 of Fig. 1.

In step 620, gating data associated with the at least one packet filter are signalled to the UL edge node, e.g. in the form of one or more gating flag. The gating data indicates whether data packets identified by the at least one packet filter are to be discarded by the UL edge node. This indication may be on a per packet filter basis, so that discarding of the identified data packets can be individually controlled for each packet filter, e.g. for a single packet filter in a set of packet filters associated with a certain traffic class or bearer. According to some embodiments, the gating data are transmitted together with the packet filter data. According to other embodiments, the gating data are transmitted separately from the packet filter data, e.g. by using a corresponding dedicated signalling message. The latter way of signalling the gating data may be used to efficiently modify the operation of existing packet filters.

The methods 500 and 600 as described in connection with Figs. 5 and 6 may be combined with each other. In particular, the method 600 of Fig. 6 may be used to provide gating data and/or packet filter data as input to step 510 in the method 500 of Fig. 5.

It is to be Understood that the examples and embodiments as explained above are merely illustrative and susceptible to various modifications. For example, the concepts could be used in other types of communication network. Various types of UL packet filters may be use in addition or as an alternative to IP 5 tuple filters. Also, different types of messages or signals may be used to convey information between different involved nodes or devices. Existing messages or signals may be modified or new messages or signals may be introduced for this purpose. Also, it should be noted that concepts of using gating data on a per packet filter basis as described herein for the UL packet filters in the UL edge node could also be applied in a corresponding manner to DL packet filters, e.g. to the DL packet filters 210 as discussed in connection with Fig. 2. Further, it is to be understood that the above concepts may be implemented by using correspondingly designed software in existing network devices, or by using dedicated network device hardware.

## Claims

1. A method of separating data traffic in an uplink edge node (100) of a communication network, comprising:
identifying, on the basis of at least one packet filter (110), data packets in uplink traffic from the edge node (100);
evaluating gating data (185) associated with the at least one packet filter (110), the gating data (185) defining, on a per packet filter basis, whether the identified data packets are to be discarded; and
depending on the evaluation of the gating data (185), discarding the identified data packets.

2. The method according to claim 1, comprising:
receiving the gating data (185) from a policy controller (300).

3. The method according to claim 1, comprising:
preconfiguring the gating data (185) in the uplink edge node (100).

4. The method according to any one of the preceding claims, comprising:
receiving the at least one packet filter (110) from a policy controller (300).

5. The method according to any one of the preceding claims, comprising:
if a data packet is identified by one of multiple packet filters (110) and the gating data (185) associated with this packet filter (110) indicates that the packet is to be discarded, discarding the identified data packet without further evaluation of the other packet filters (110).

6. A method of policy control, comprising:
signalling, to an uplink edge node (100) of a communication network, at least one packet filter (110) for identifying data packets in uplink traffic from the uplink edge node (100); and
signalling, to the uplink edge node (100), gating data (185) associated with the at least one packet filter (110), the gating data (185) defining, on a per packet filter basis, whether the identified data packets are to be discarded by the uplink edge node (100).

7. The method according to claim 6, comprising:
transmitting the gating data (185) together with the at least one packet filter (110).

8. The method according to claim 6, comprising:
transmitting the gating data (185) separately from the at least one packet filter (110).

9. A device operable as an uplink edge node (100) of a communication network, comprising:
an interface (130) configured to transmit uplink data traffic from the uplink edge node (100); and
a processor (150) configured to identify, on the basis of at least one packet filter (110), data packets in the uplink data traffic, to evaluate gating data (185) associated with the at least one packet filter (110), the gating data (185) defining, on a per packet filter basis, whether the identified data packets are to be discarded, and to discard the identified data packets depending on the evaluation of the gating data (185).

10. The device according to claim 9, comprising:
an interface (130) configured to receive the gating data (185) from a policy controller (300).

11. The device according to claim 9 or 10, comprising:
a memory (160) configured to store the gating data (185), and/or
an interface (130) configured to receive the at least one packet filter (110) from a policy controller (300).

12. The device according to any one of claims 9 to 11,
wherein, if a data packet is identified by one of multiple packet filters (110) and the gating data (185) associated with this packet filter (110) indicates that the packet is to be discarded, the processor (150) is configured to discard the identified data packet without further evaluation of the other packet filters (110).

13. A device operable as a policy controller (300) for an uplink edge node (100) of a mobile communication network, comprising:
an interface (340) configured to signal at least one packet filter (110) and gating data (185) associated with the at least one packet filter (110) to the uplink edge node (100), the at least one packet filter (110) being configured to identify data packets in uplink traffic from the uplink edge node (100), and the gating data (185) defining, on a per packet filter basis,
whether the data packets identified by the uplink edge node are to be discarded by the uplink edge node (100).

14. A computer program product comprising program code to be executed by a processor of an uplink edge node (100) of a mobile communication network, thereby causing the uplink edge node (100) to operate according to a method as defined in any one of claims 1-5.

15. A computer program product comprising program code to be executed by a processor of a policy controller (300) of a mobile communication network, thereby causing the policy controller (300) to operate according to a method as defined in any one of claims 6-8.

## Patentansprüche

1. Verfahren zur Trennung von Datenverkehr in einem Uplink-Kantenknoten (100) eines Kommunikationsnetzes, umfassend:
Identifizieren auf der Basis mindestens eines Paketfilters (110) von Datenpaketen in Uplink-Verkehr vom Kantenknoten (100);
Auswerten von Steuerdaten (185), die mit dem mindestens einen Paketfilter (110) assoziiert sind, wobei die Steuerdaten (185) auf einer Pro-Paketfilter-Basis definieren, ob die identifizierten Datenpakete verworfen werden sollen; und
Verwerfen der identifizierten Datenpakete in Abhängigkeit von der Auswertung der Steuerdaten (185).

2. Verfahren nach Anspruch 1, umfassend:
Empfangen der Steuerdaten (185) von einer Richtliniensteuerung (300) .

3. Verfahren nach Anspruch 1, umfassend:
Vorkonfigurieren der Steuerdaten (185) im Uplink-Kantenknoten (100).

4. Verfahren nach einem der vorhergehenden Ansprüche, umfassend:
Empfangen des mindestens einen Paketfilters (110) von der Richtliniensteuerung (300).

5. Verfahren nach einem der vorhergehenden Ansprüche, umfassend:
Verwerfen des identifizierten Datenpakets ohne weitere Auswertung der anderen Paketfilter (110), wenn ein Datenpaket durch eines von mehreren Paketfiltern (110) identifiziert wird, und die mit diesem Paketfilter (110) assoziierten Steuerdaten (185) anzeigen, dass das Paket verworfen werden soll.

6. Verfahren zur Richtliniensteuerung, umfassend:
Signalisieren an einen Uplink-Kantenknoten (100) eines Kommunikationsnetzes mindestens eines Paketfilters (110) zum Identifizieren von Datenpaketen in Uplink-Verkehr vom Uplink-Kantenknoten (100); und
Signalisieren an den Uplink-Kantenknoten (100) von Steuerdaten (185), die mit dem mindestens einen Paketfilter (110) assoziiert sind, wobei die Steuerdaten (185) auf einer Pro-Paketfilter-Basis definieren, ob die identifizierten Datenpakete durch den Uplink-Kantenknoten (100) verworfen werden sollen.

7. Verfahren nach Anspruch 6, umfassend:
Senden der Steuerdaten (185) zusammen mit dem mindestens einen Paketfilter (110).

8. Verfahren nach Anspruch 6, umfassend:
Senden der Steuerdaten (185) getrennt von dem mindestens einen Paketfilter (110).

9. Vorrichtung, die als Uplink-Kantenknoten (100) eines Kommunikationsnetzes betrieben werden kann, umfassend:
eine Schnittstelle (130), die so konfiguriert ist,
dass sie Uplink-Datenverkehr vom Uplink-Kantenknoten (100) sendet; und
einen Prozessor (150), der so konfiguriert ist, dass er auf der Basis mindestens eines Paketfilters (110) Datenpakete im Uplink-Datenverkehr identifiziert,
Steuerdaten (185) auswertet, die mit dem mindestens einen Paketfilter (110) assoziiert sind, wobei die Steuerdaten (185) auf einer Pro-Paketfilter-Basis definieren, ob die identifizierten Datenpakete verworfen werden sollen, und die identifizierten Datenpakete in Abhängigkeit von der Auswertung der Steuerdaten (185) verwirft.

10. Vorrichtung nach Anspruch 9, umfassend:
eine Schnittstelle (130), die so konfiguriert ist,
dass sie die Steuerdaten (185) von einer Richtliniensteuerung (300) empfängt.

11. Vorrichtung nach Anspruch 9 oder 10, umfassend:
einen Speicher (160), der so konfiguriert ist, dass er die Steuerdaten (185) speichert; und/oder
eine Schnittstelle (130), die so konfiguriert ist, dass sie das mindestens eine Paketfilter (110) von einer Richtliniensteuerung (300) empfängt.

12. Vorrichtung nach einem der Ansprüche 9 bis 11,
wobei der Prozessor (150) so konfiguriert ist, dass er das identifizierte Datenpaket ohne weitere Auswertung der anderen Paketfilter (110) verwirft, wenn ein Datenpaket durch eines von mehreren Paketfiltern (110) identifiziert wird, und die mit diesem Paketfilter (110) assoziierten Steuerdaten (185) anzeigen, dass das Paket verworfen werden soll.

13. Vorrichtung, die als Richtliniensteuerung (300) für einen Uplink-Kantenknoten (100) eines Mobilkommunikationsnetzes betrieben werden kann, umfassend:
eine Schnittstelle (340), die so konfiguriert ist,
dass sie mindestens ein Paketfilter (110) und Steuerdaten (185), die mit dem mindestens einen Paketfilter (110) assoziiert sind, an den Uplink-Kantenknoten (100) signalisiert, wobei das mindestens eine Paketfilter (110) so konfiguriert ist, dass es Datenpakete in Uplink-Verkehr vom Uplink-Kantenknoten (100) identifiziert, und die Steuerdaten (185) auf einer Pro-Paketfilter-Basis definieren, ob die durch den Uplink-Kantenknoten identifizierten Datenpakete durch den Uplink-Kantenknoten (100) verworfen werden sollen.

14. Computerprogrammprodukt, umfassend Programmcode, der durch einen Prozessor eines Uplink-Kantenknotens (100) eines Mobilkommunikationsnetzes ausgeführt werden soll, um dadurch den Uplink-Kantenknoten (100) zu veranlassen, gemäß einem Verfahren nach einem der Ansprüche 1 bis 5 zu funktionieren.

15. Computerprogrammprodukt, umfassend Programmcode, der durch einen Prozessor einer Richtliniensteuerung (300) eines Mobilkommunikationsnetzes ausgeführt werden soll, um dadurch die Richtliniensteuerung (300) zu veranlassen, gemäß einem Verfahren nach einem der Ansprüche 6 bis 8 zu funktionieren.

## Revendications

1. Procédé de séparation du trafic de données dans un noeud périphérique en liaison montante (100) d'un réseau de communication, comprenant de :
identifier, sur la base d'au moins un filtre de paquets (110), les paquets de données dans le trafic de liaison montante provenant du noeud périphérique (100) ;
évaluer les données de portillonnage (185) associées à au moins un filtre de paquet (110), les données de portillonnage (185) définissant, sur une base de filtre de paquet, si les paquets de données identifiés doivent être rejetés ; et
en fonction de l'évaluation des données de portillonnage (185), rejeter les paquets de données identifiés.

2. Procédé selon la revendication 1, comprenant de :
recevoir les données de portillonnage (185) depuis un contrôleur de politique (300).

3. Procédé selon la revendication 1, comprenant de :
préconfigurer les données de portillonnage (185) dans le noeud périphérique de liaison montante (100).

4. Procédé selon une quelconque des revendications précédentes, comprenant de :
recevoir au moins un filtre de paquet (100) depuis un contrôleur de politique (300).

5. Procédé selon une quelconque des revendications précédentes, comprenant de :
si un paquet de données est identifié par un des filtres de paquets multiples (110) et les données de portillonnage (185) associées à ce filtre de paquet (110) indiquent que le paquet doit être rejeté, rejeter le paquet de données identifié sans évaluation supplémentaire des autres filtres de paquet (110).

6. Procédé de commande de politique, comprenant de :
signaler, à un noeud périphérique de liaison montante (100) d'un réseau de communication, au moins un filtre de paquet (110) pour identifier les paquets de données dans le trafic de liaison montante provenant du noeud périphérique de liaison montante (100) ; et signaler, au noeud périphérique de liaison montante (100), les données de portillonnage (185) associées à au moins un filtre de paquet (110), les données de portillonnage (185) définissant, sur une base de filtre de paquet, si les paquets de données identifiés doivent être rejetés par le noeud périphérique de liaison montante (100).

7. Procédé selon la revendication 6, comprenant de :
transmettre les données de portillonnage (185) conjointement à au moins un filtre de paquet (110).

8. Procédé selon la revendication 6, comprenant de :
transmettre les données de portillonnage (185) séparément d'au moins un filtre de paquet (110).

9. Dispositif opérationnel comme un noeud périphérique de liaison montante (100) d'un réseau de communication, comprenant :
une interface (130) configurée pour transmettre du trafic de données de liaison montante depuis le noeud périphérique de liaison montante (100) ; et
un processeur (150) configuré pour identifier, sur la base d'au moins un filtre de paquets (110), les paquets de données dans le trafic de données de liaison montante, évaluer les données de portillonnage (185) associées à au moins un filtre de paquet (110), les données de portillonnage (185) définissant, sur une base de filtre de paquet, si les paquets de données identifiés doivent être rejetés, et rejeter les paquets de données identifiés en fonction de l'évaluation des données de portillonnage (185).

10. Dispositif selon la revendication 9, comprenant :
une interface (130) configurée pour recevoir les données de portillonnage (185) depuis un contrôleur de politique (300) .

11. Dispositif selon les revendications 9 ou 10, comprenant :
une mémoire (160) configurée pour mémoriser les données de portillonnage (185), et/ou
une interface (130) configurée pour recevoir au moins un filtre de paquet (110) depuis un contrôleur de politique (300) .

12. Dispositif selon une quelconque des revendications 9 à 11,
dans lequel, si un paquet de données est identifié par un des filtres de paquet multiples (110) et les données de portillonnage (185) associées à ce filtre de paquet (110) indiquent que le paquet doit être rejeté, le processeur (150) est configuré pour rejeter les paquet de données identifié sans évaluation supplémentaire des autres filtres de paquets (110).

13. Dispositif opérationnel comme un contrôleur de politique (300) pour un noeud périphérique de liaison montante (100) d'un réseau de communication mobile, comprenant :
une interface (340) configurée pour signaler au moins un filtre de paquet (110) et les données de portillonnage (185) associées à au moins un filtre de paquet (110) au noeud périphérique de liaison montante (100), au moins un filtre de paquet (110) étant configuré pour identifier des paquets de données dans un trafic de liaison montante depuis le noeud périphérique de liaison montante (100) et les données de portillonnage (185) définissant, sur une base de filtre paquet, si les paques de données identifiés par le noeud périphérique de liaison montante doivent être rejetés par le noeud périphérique de liaison montante (100) .

14. Produit de programme informatique comprenant du code de programme à exécuter par un processeur d'un noeud périphérique de liaison montante (100) d'un réseau de communication mobile, en amenant ainsi le noeud périphérique de liaison montante (100) à fonctionner selon un procédé tel que défini dans une quelconque des revendications 1-5.

15. Produit de programme informatique comprenant du code de programme à exécuter par un processeur d'un contrôleur de politique (300) d'un réseau de communication mobile, en amenant ainsi le contrôleur de politique (300) à fonctionner selon un procédé tel que défini dans une quelconque des revendications 6-8.
